# EUROPÄISCHE PATENTANMELDUNG

(11) **EP 2 224 186 A2**
(43) Veröffentlichungstag der Anmeldung: **01.09.2010**
(21) Anmeldenummer: 10001342.4
(22) Anmeldetag: 10.02.2010
(51) Int. Cl.: F24J 2/52, E04D 13/18

(54) **Vorrichtung für die Befestigung von Teilen an bzw. über der Dachfläche eines Gebäudes, sowie einen Beschlag, welcher Teil dieser Vorrichtung ist**

(30) Priorität: 17.02.2009 AT 2702009
(71) Anmelder: Simmer, Jane-Beryl, 4810 Gmunden (AT)
(72) Erfinder: Rubenzer, Hans Peter, 4810 Gmunden (DE)

(57) **Zusammenfassung**

Die Erfindung betrifft eine Vorrichtung für die Befestigung von Teilen an bzw. über der Dachfläche eines Gebäudes dessen Dachkonstruktion Sparren, Konterlatten und Dachlatten und eine über diesen angeordnete Dachhaut aufweist. Ein Beschlag (4) liegt mit einer Auflagefläche (4.5) zwischen zwei benachbarten Dachlatten (3) auf jener Mantelflächenseite einer Konterlatte (2) auf, welche der Dachhaut zugewandt liegt. Er wird durch Schrauben (5), welche im Wesentlichen normal zu seiner Auflagefläche (4.5) durch ihn verlaufen und mit ihrem Gewinde in einem Sparren (1) verankert sind, mit einem Sparren (1) verbunden. Schrauben (6), welche in einem spitzen Winkel zu seiner Auflagefläche (4.5) durch ihn verlaufen, mit ihrem Gewinde in der Konterlatte (2) verankert sind, mit der Konterlatte (2) verbinden ihn mit der Konterlatte. Vom dem Beschlag (4) aus ragt ein Bolzen über die Ebene der Dachhaut hinaus. Mit diesem Bolzen ist der an bzw. über der Dachfläche zu befestigende Teil verbunden.

## Beschreibung

Die Erfindung betrifft eine Vorrichtung für die Befestigung von Teilen an bzw. über der Dachfläche eines Gebäudes, sowie einen Beschlag, welcher Teil dieser Vorrichtung ist. Der wichtigste Anwendungsfall für die erfindungsgemäße Vorrichtung ist vermutlich die Befestigung von thermischen oder elektrischen Sonnenkollektoren auf einer Dachfläche.

In der DE 202005019628 U1 wird vorgeschlagen, eine Schraube, welche in einem Sparren des Dachstuhls verankert ist, normal zur Ebene der Dachhaut durch diese verlaufen zu lassen und die an dieser Stelle als spezielle Dachpfanne ausgebildete Dachhaut an der Schraube unter Anbringung einer Dichtung zu verankern. An dem über die Dachhaut ragenden Teil der Schraube können dann die Aufbauten befestigt werden. Neben dem Erfordernis einer separaten Dachpfanne ist an der Bauweise nachteilig, dass jene Kraftkomponenten, welche von den Anbauten aus auf die Befestigung wirken und parallel zur Ebene der Dachhaut ausgerichtet sind, eine Biegung besagter Schraube bewirken und vor allem von der Dachhaut aufgefangen werden müssen. Bei schweren Aufbauten können diese Kräfte für die Dachhaut bzw. für die Befestigung von deren Elementen am Dachstuhl zu groß sein.

Der gleiche Kritik gilt auch für die Bauweisen gemäß der GB 2259527 A und der US 5746029 A bei denen ebenfalls ein am Dachstuhl verankerter, länglicher Befestigungsteil normal zur Dachhaut durch eine Öffnung in der Dachhaut über diese hinaus ragt.

Gemäß der EP 157641 B1 wird ein spezieller Dachstein verwendet, welcher ein Durchgangsloch mit einer verstärkten Umrahmung aufweist. Durch das Durchgangsloch hindurch ragt der Mittelteil eines T-förmigen Ankers. Der Querbalken des Ankers liegt an der Unterseite von Dachlatten an. Dachstein und Dachlatten werden aneinandergepresst indem am Mittelteil eine Mutter gegen den Dachstein angezogen wird. Vorteilhaft ist, dass man durch den Aufbau des Ankers von der genauen Lage der Dachlatten relativ zum Durchgangsloch unabhängig ist. Nachteilig ist, dass ein spezieller Dachstein erforderlich ist und dass alle Kräfte in die Dachlatten eingeleitet werden. Diese Latten und ihre Befestigung an der weiteren Dachstuhlkonstruktion sind aber im Allgemeinen nicht für sehr so hohe Beanspruchungen ausgelegt wie sie bei schweren Dachaufbauten zustande kommen können.

Von diesem Stand der Technik ausgehend lag die der Erfindung zu Grunde liegende Aufgabe darin, eine Vorrichtung für das Befestigen von Aufbauten an und über der Dachhaut eines Gebäudes zu entwickeln, wodurch auch große durch die Aufbauten an das Dach zu übertragende Kräfte statisch einwandfrei in den Dachstuhl eingeleitet werden.

Erfindungsgemäß wird vorgeschlagen, einen Beschlag zwischen zwei benachbarten Dachlatten auf jener Mantelflächenseite einer Konterlatte anzuordnen, welche der Dachhaut zugewandt liegt. Gegen Bewegung normal zur Ebene der Dachhaut wird der Beschlag durch Schrauben gesichert, welche von dem Beschlag ausgehend zu einem Sparren führen und an diesem verankert sind. Gegen Bewegung in der Ebene parallel zur Ebene der Dachhaut, wird der Beschlag durch Schrauben gesichert, welche in einem spitzen Winkel vom Beschlag aus in die anliegende Konterlatte verlaufen. Am Beschlag ist ein Bolzen angeordnet bzw. befestigbar, welcher normal zur Ebene der Dachhaut, ggf. durch eine Bohrung über die Ebene der Dachhaut hinaus ragt. An diesem Bolzen können Aufbauten wie typischerweise ein Sonnenkollektor befestigt werden.

Die Erfindung wird an Hand von skizzenhaften Zeichnungen zu einer beispielhaften Ausführungsform und einer beispielhaften Einbausituation veranschaulicht:
- Fig. 1:: zeigt die für das Verständnis der Erfindung wesentlichen Teile einer beispielhaften Einbausituation eines beispielhaften erfindungsgemäßen Beschlages in einer seitlichen Teilschnittansicht.

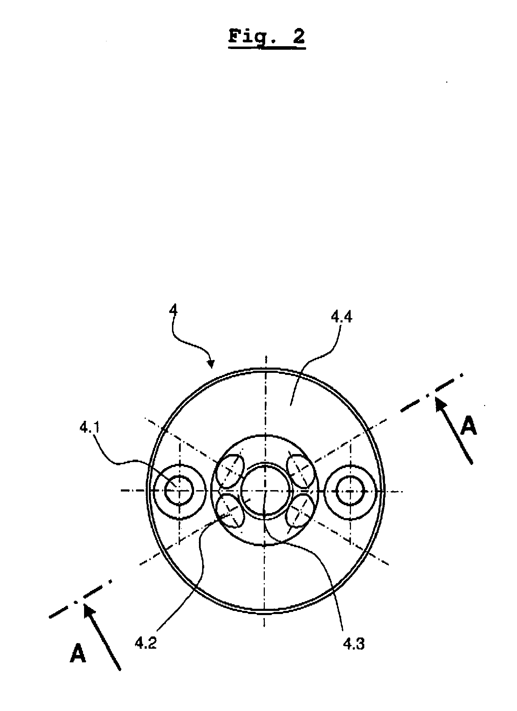

- Fig. 2:: zeigt den Beschlag von Fig. 1 von oben.

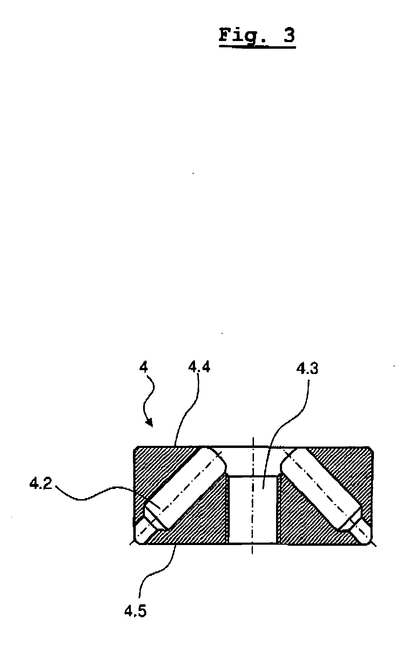

- Fig. 3:: zeigt die in Fig. 2 gekennzeichnete Schnittansicht A-A des Beschlages von Fig. 1 und Fig. 2.

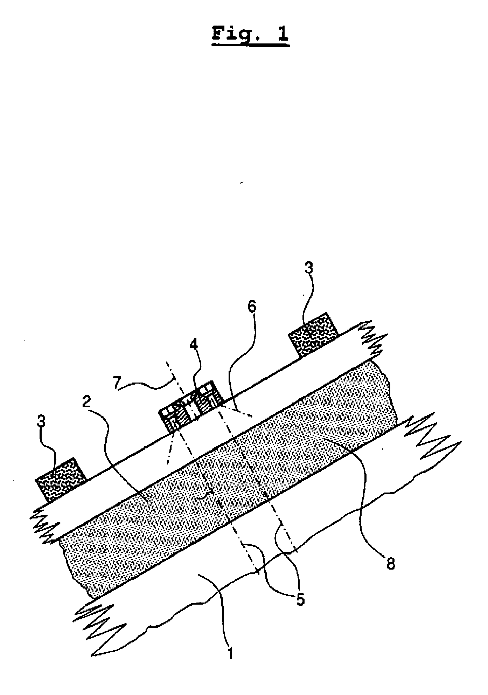

Fig. 1 zeigt den heutzutage üblichen Aufbau der Dachkonstruktion eines als "Warmdach" oder "einschaliges Dach" bezeichneten Daches. Die gezeigten Teile der Dachkonstruktion sind ein Sparren 1, eine Konterlatte 2, Dachlatten 3 und Wärmedämmung 8. Sparren 1 und Konterlatten 2 verlaufen in einem Abstand zueinander und parallel zueinander in Richtung der Dachneigung. Die tiefer liegenden Sparren sind die stärkeren Balken, welche im Wesentlichen das Gewicht der Dachfläche tragen und an die seitlichen Mauern des Gebäudes weiterleiten. Der Raum zwischen Sparren und Konterlatten ist - neben den hier nicht gezeigten statischen Verbindungselementen - mit Wärmedämmung 8 gefüllt. Die Dachlatten 3 sind an der oberen Mantelflächenseite der Konterlatten 2 befestigt und verlaufen waagrecht. An den Dachlatten 3 werden die - hier nicht dargestellten - Elemente der Dachhaut wie typischerweise Dachziegel oder Profilblechbahnen befestigt.

Der erfindungsgemäße Beschlag 4 ist im Raum zwischen zwei benachbarten Dachlatten 3 angeordnet und liegt mit seiner Auflagefläche 4.5 wie die Dachlatten auf der oberen Teilmantelfläche einer Konterlatte 2 auf. Typischerweise hat der Beschlag 4 die Form einer Scheibe, beispielsweise einer Kreisscheibe, deren Fläche in Einbausituation parallel zur Ebene der Dachfläche liegt und deren Dicke maximal das gleiche Maß beträgt, wie jenes um welches die Dachlatten 3 auf die Konterlatten 2 auftragen.

Der Beschlag 4 weist drei verschiedene Arten von Bohrungen 4.1, 4.2, 4.3 auf.

Die beiden Bohrungen 4.1 sind Schraubendurchgangsbohrungen. Sie sind normal auf die Auflagefläche 4.5 des Beschlages 4 an der Konterlatte 2 ausgerichtet und sie sind an der gegenüberliegenden Deckfläche 4.4 des Beschlages mit einer Ansenkung versehen. Über die beiden Bohrungen 4.1 wird der Beschlag 4 mittels langer Schrauben 5 durch Bohrungen in der Konterlatte 2 hindurch mit dem Sparren 1 verbunden. Für den Fall, dass die Wärmedämmung 1 ein Material mit recht geringer Druckfestigkeit ist, sind die Schrauben 5 über annähernd ihre ganze Länge mit einem Gewinde auszustatten, sodass dieses in fertig eingeschraubtem Zustand sowohl mit der Konterlatte 2 als auch mit dem Sparren 1 in Eingriff ist und dadurch den Abstand zwischen Konterlatte und Sparren fixiert. Wenn die Wärmedämmung aus einem festeren Material besteht, brauchen die Schrauben 5 nur an ihrem vorderen Bereich mit einem Gewinde ausgestattet zu sein, da dann ohnedies nicht die Gefahr besteht, dass durch die Wirkung dieser Schrauben die Konterlatte unzulässig gegen den Sparren gezogen wird. Die Schrauben 5 bewirken die Fixierung des Beschlages 4 gegen Relativbewegung zum Sparren in der zur Dachfläche normalen Richtung.

Die vier Bohrungen 4.2 sind ebenfalls Schraubendurchgangsbohrungen. Auch sie verlaufen von der Deckseite 4.4 des Beschlages zu dessen Auflagefläche 4.5. Allerdings verlaufen sie zur Auflagefläche 4.5 nicht normal, sondern sind dazu geneigt angeordnet, idealerweise in einem Winkel von etwa 45°. Die zur Auflagefläche 4.5 parallel liegenden Richtungskomponenten der vier Bohrungen 4.2 weisen von einem gemeinsamen Mittelpunkt sternförmig auseinander. Die Bohrungen 4.2 sind Stufenbohrungen, wobei der Längsbereich mit größerem Durchmesser an der Seite der Deckfläche 4.4 liegt. Durch Schrauben 6, welche durch die Bohrungen 4.2 verlaufen und mit ihren Gewindespitzen in der Konterlatte 2 verankert sind, wird der Beschlag an der Konterlatte 2 im Wesentlichen gegen Verschiebung in der zur Dachfläche parallelen Ebene gehalten.

Eine normal zur Grundfläche 4.5 des Beschlages ausgerichtete mittlere Bohrung 4.3 ist als Gewindebohrung mit einem deutlich größeren Durchmesser als die zuvor genannten Bohrungen ausgebildet. In diese Bohrung 4.3 kann ein Gewindebolzen eingeschraubt werden, welcher bei fertig montiertem Zustand ggf. durch eine Öffnung in der Dachhaut über deren Ebene hinaus ragt. An dem hinausragenden Teil des Bolzens können Teile die am Dach zu befestigen sind, beispielsweise ein Sonnenkollektor oder eine Antenne etc. befestigt werden.

Für die Anwendung der Befestigungsmethode ist es egal, ob die Elemente der Dachhaut in dem Bereich in welchem ein Aufbau wie beispielsweise ein flächiges Kollektorelement angebracht werden soll, zur Gänze entfernt und durch ein anderes Element ersetzt werden, oder ob nur eine Bohrung im vorhandenen Element der Dachhaut angebracht wird, durch welche besagter, in die Bohrung 4.3 des Beschlages 4 einschraubbarer Bolzen ragt.

Die Befestigungsmethode ist natürlich auch bei Kaltdächern anwendbar, bei denen die Konterlatten ohne Wärmeisolierende Zwischenschicht sondern nur durch eine Zwischenlage von Brettern oder Holzplatten an den Sparren aufliegen. Man findet dabei mit kürzeren Schrauben 5 das Auslangen.

Sofern sicher nur kleine Belastungen zu erwarten sind, brauchen die Schrauben 5 nicht unbedingt im Sparren 1 verankert zu sein, es kann dann auch ausreichen sie nur in der Konterlatte 2 zu verankern.

Die dargestellte Form des Beschlages 4 als Kreisringscheibe, welche mit zusätzlichen Bohrungen versehen ist, ist relativ schön und gut als Drehteil herstellbar. Selbstverständlich sind aber auch andere Formen des Beschlages 4 denkbar. Beispielsweise kann der Beschlag 4 eine im Wesentlichen prismatische Form aufweisen, wozu Bandstahl mit Bohrungen versehen und in einzelne Stücke geschnitten sein könnte. Natürlich könnte der Beschlag 4 als nachträglich spanabhebend bearbeiteter Schmiede- oder Gussteil gefertigt sein.

Anstatt der Gewindebohrung 4.3 am Beschlag 4 in welche ein Bolzen einschraubbar ist, könnte auch ein Bolzen einstückig mit dem Beschlag 4 verbunden sein. Vorteilhaft daran wäre die bessere Kraftübertragung. Nachteilig wären die geringer Flexibilität und Platzprobleme vor allem beim Anbringen der Schrauben 6.

## Patentansprüche

1. Vorrichtung für die Befestigung von Teilen an bzw. über der Dachfläche eines Gebäudes dessen Dachkonstruktion Sparren, Konterlatten und Dachlatten und eine über diesen angeordnete Dachhaut aufweist, **dadurch gekennzeichnet, dass** ein Beschlag (4) mit einer Auflagefläche (4.5) zwischen zwei benachbarten Dachlatten (3) auf jener Mantelflächenseite einer Konterlatte (2) aufliegt, welche der Dachhaut zugewandt liegt, dass der Beschlag (4) durch Schrauben (5), welche im Wesentlichen normal zu seiner Auflagefläche (4.5) durch ihn verlaufen und mit ihrem Gewinde in einem Sparren (1) verankert sind, mit einem Sparren (1) verbunden ist, dass der Beschlag (4) durch Schrauben (6), welche in einem spitzen Winkel zu seiner Auflagefläche (4.5) durch ihn verlaufen, mit ihrem Gewinde in der Konterlatte (2) verankert sind, mit der Konterlatte (2) verbunden ist und dass vom Beschlag (4) ein Bolzen über die Ebene der Dachhaut hinaus ragt und der an bzw. über der Dachfläche zu befestigende Teil mit diesem Bolzen verbunden ist.

2. Vorrichtung nach Anspruch 1, **dadurch gekennzeichnet, dass** die Schrauben (5) durch die Konterlatte (2) hindurch verlaufen.

3. Vorrichtung nach Anspruch 2, **dadurch gekennzeichnet, dass** die Schrauben (5) auch mit der Konterlatte (2) in Gewindeeingriff stehen.

4. Vorrichtung nach einem der bisherigen Ansprüche, **dadurch gekennzeichnet, dass** die Bohrungen (4.2) im Beschlag (4), durch welche die Schrauben (6) verlaufen, gegenüber der Auflagefläche (4.5) des Beschlages (4) um einen Winkel von 40° bis 50° geneigt sind.

5. Vorrichtung nach einem der bisherigen Ansprüche, **dadurch gekennzeichnet, dass** die zur Auflagefläche (4.5) parallel liegenden Richtungskomponenten der vier Bohrungen (4.2) für die Schrauben (6) von den Orten der Schraubenköpfe zu den jeweiligen Orten der Schraubenspitzen, zweidimensional sternförmig auseinander weisen.

6. Vorrichtung nach Anspruch 5, **dadurch gekennzeichnet, dass** innerhalb jener Richtungskomponenten der Bohrungen (4.2) für die Schrauben (6), welche parallel zur Auflagefläche (4.5) liegen, die zur Längsrichtung der Konterlatte (2) parallel liegenden Richtungskomponenten gegenüber den dazu normal liegenden Richtungskomponenten überwiegen.

7. Vorrichtung nach einem der bisherigen Ansprüche, **dadurch gekennzeichnet, dass** der Beschlag (4) eine zu seiner Auflagefläche (4.5) zumindest annähernd normal ausgerichtete, zu seiner Deckfläche (4.4) hin offene, als Mutterngewinde ausgebildete Bohrung (4.3) aufweist, in welche ein über die Dachhaut ragender Bolzen einschraubbar ist.

8. Vorrichtung nach Anspruch 7, **dadurch gekennzeichnet, dass** die Bohrung (4.3) an der Deckfläche (4.4) des Beschlages (4) eine Ansenkung aufweist, von welcher aus die Bohrungen (4.2) durch den Beschlag (4) verlaufen.

9. Vorrichtung nach einem der bisherigen Ansprüche, **dadurch gekennzeichnet, dass** durch sie ein Sonnenkollektor gehalten ist.
